# EUROPEAN PATENT APPLICATION

(11) **EP 2 821 901 A1**
(43) Date of publication of application: **07.01.2015**
(21) Application number: 12873832.5
(22) Date of filing: 11.05.2012
(51) Int. Cl.: G06F 3/048

(54) **METHOD AND APPARATUS FOR PROCESSING KEYBOARD INPUT**

(30) Priority: 06.04.2012 CN 201210100819
(71) Applicant: ZTE Corporation, Shenzhen, Guangdong 518057 (CN)
(72) Inventor: CHEN, Jianjiang, Shenzhen Guangdong 518057 (CN); XIAO, Qihu, Shenzhen Guangdong 518057 (CN)
(74) Representative: Price, Nigel John King
(86) International application number: PCT/CN2012/075330
(87) International publication number: WO 2013/149421

(57) **Abstract**

A method for processing keyboard input and an apparatus are disclosed. The method includes: after the apparatus receives a user touch input instruction, invoking and displaying a keyboard in a display screen, wherein, part or all of the keys in the keyboard are virtual three-dimensional keys, and one or more surfaces of the three-dimensional keys are labeled with corresponding key input information. With the method, it can solve the problem of previewing the switch of key functions, and make the user predict operation results in advance without memorizing the switch of key functions, which reduces the repeated steps of user operations and improves the operation efficiency.

## Description

### Technical Field

The present document relates to a method for processing keyboard input and an apparatus.

### Background of the Related Art

At present, a touch screen is widely used in mobile phones and tablet personal computers and so on. For example, compared with the input operations of the previous mobile phones with keys, the input operations of the mobile phones with touch screen have great improvement in the aspect of user experience, and the touch screen enables users to directly operate the keys on the screen, which reduces the focusing process of the traditional mobile phones with keys, and improves the operation efficiency.

However, the graphic design is still used for the key design of text input keyboards on the touch screen at the moment, and if a user needs to switch the key functions, it is required to perform switching by clicking the function keys. For example, switch from letter keys to punctuation keys, number keys, emoticon keys, or letter symbol groups (such as http://www.com.cn and so on) related to the network is mostly implemented by clicking the corresponding function keys.

Such operation way of switching the key functions by clicking the function keys has certain disadvantages, the user cannot preview the switch results, and if the switch results are not the results that the user needs, the user has to return and try to seek again, which brings a lot of frustrations to the user operations and also reduces the operation efficiency.

### Summary of the Invention

The technical problem required to be solved in the example of the present document is to provide a method for processing keyboard input and an apparatus, to solve the problem of previewing the switch of key functions.

In order to solve the above technical problem, the example of the present document provides a method for processing keyboard input, applied to an apparatus with a touch screen, which comprises:
after the apparatus receives a user touch input instruction, invoking and displaying a keyboard in a display screen, wherein, the keyboard includes virtual three-dimensional keys, and one or more surfaces of the three-dimensional keys are labeled with corresponding key input information.

The above method is further characterized in that: after invoking and displaying the keyboard in the display screen, the method further comprises:
detecting a key touch behavior of a user, and performing corresponding operation processing according to the key touch behavior of the user.

The above method is further characterized in that: performing corresponding operation processing according to the key touch behaviors of the user comprises one or more of the followings:
if it is determined that the key touch behavior of the user is clicking the three-dimensional keys, outputting key input information of assignments on front surfaces of the three-dimensional keys clicked by the user and displaying the key input information;
if it is determined that the key touch behavior of the user is sliding one three-dimensional key, rotating the three-dimensional key at a predetermined angle according to a user touch slide direction;
if it is determined that the key touch behavior of the user is sliding at least two three-dimensional keys, rotating all the three-dimensional keys in the three-dimensional keyboard at a predetermined angle according to a user touch slide direction; and
if it is determined that the key touch behavior of the user is a keyboard editing instruction, entering a keyboard editing state, and according to a key clicked by the user, editing key input information of one or more surfaces of the key or deleting the key, or newly adding one or more keys in a specified area clicked by the user.

The above method is further characterized in that: after invoking and displaying the keyboard in the display screen, the method further comprises:
after receiving an instruction of transforming three-dimensional keys, transforming the three-dimensional keys in the keyboard into the three-dimensional keys selected by the user.

The above method is further characterized in that: after invoking and displaying the keyboard in the display screen, the method further comprises:
after receiving an instruction of switching keyboard modes, switching a keyboard mode displayed in the screen to a keyboard mode selected by the user.

The above method is further characterized in that: the three-dimensional keys include one or more of the followings:
cubic keys, cuboid keys, trapezoid keys, spherical keys, cylindrical keys, conical keys and triangular pyramid keys.

The above method is further characterized in that: the key input information includes one or more of the followings:
letters, numbers, symbols, strokes, word groups and letter symbol groups.

In order to solve the above problem, the example of the present document further provides an apparatus with a touch screen, which comprises:
a touch screen input module, configured to: after receiving a user touch input instruction, send the user touch input instruction to a processing module;
the processing module, configured to: after receiving the user touch input instruction, invoke a keyboard; and
a display module, configured to: display the keyboard, wherein, the keyboard includes virtual three-dimensional keys, and one or more surfaces of the three-dimensional keys are labeled with corresponding key input information.

The above apparatus is further characterized in that: the touch screen input module is further configured to: detect a key touch behavior of a user, and send the key touch behavior to the processing module;
the processing module is further configured to: analyze the key touch behavior, if it is determined that the key touch behavior is clicking the three-dimensional keys, output key input information of assignments on front surfaces of the three-dimensional keys clicked by the user; if it is determined that the key touch behavior is sliding one three-dimensional key, rotate the three-dimensional key at a predetermined angle according to a user touch slide direction; if it is determined that the key touch behavior is sliding at least two three-dimensional keys, rotate all the three-dimensional keys in the three-dimensional keyboard at a predetermined angle according to a user touch slide direction; and if it is determined that the key touch behavior of the user is a keyboard editing instruction, enter a keyboard editing state, and according to a key clicked by the user, edit key input information of one or more surfaces of the key or delete the key, or newly add one or more keys in a specified area clicked by the user; and
the display module is further configured to: display the key input information output by the processing module, or display a rotation position change state of one three-dimensional key, or display rotation position change states of all the three-dimensional keys, or display the keyboard editing state.

The above apparatus is further characterized in that:
the processing module is further configured to: after receiving an instruction of transforming three-dimensional keys, transform the three-dimensional keys in the keyboard into the three-dimensional keys selected by the user.

The above apparatus is further characterized in that:
the processing module is further configured to: after receiving an instruction of switching keyboard modes, switch a mode of the keyboard to a keyboard mode selected by the user.

The above apparatus is further characterized in that: the three-dimensional keys include one or more of the followings:
cubic keys, cuboid keys, trapezoid keys, spherical keys, cylindrical keys, conical keys and triangular pyramid keys;
the key input information includes one or more of the followings:
   letters, numbers, symbols, strokes, word groups and letter symbol groups.

In conclusion, the example of the present document provides a method for processing keyboard input and an apparatus, which can solve the problem of previewing the switch of key functions, and make the user predict operation results in advance without memorizing the switch of the key functions, thereby reducing the repeated steps of user operations and improving the operation efficiency.

### Brief Description of Drawings

FIG. 1 is a schematic diagram of an apparatus with touch screen according to the example of the present document.
FIG. 2 is a flow diagram of a method for processing keyboard input according to the example of the present document.
FIG. 3 is a schematic diagram of a single three-dimensional key according to the example of the present document.
FIG. 4 is a schematic diagram of a keyboard with three-dimensional keys according to the example of the present document.

### Preferred Embodiments of the Present Invention

The examples of the present document will be described in detail in combination with the accompanying drawings below. It should be noted that the examples in the present document and the characteristics in the examples can be optionally combined with each other in the condition of no conflict.

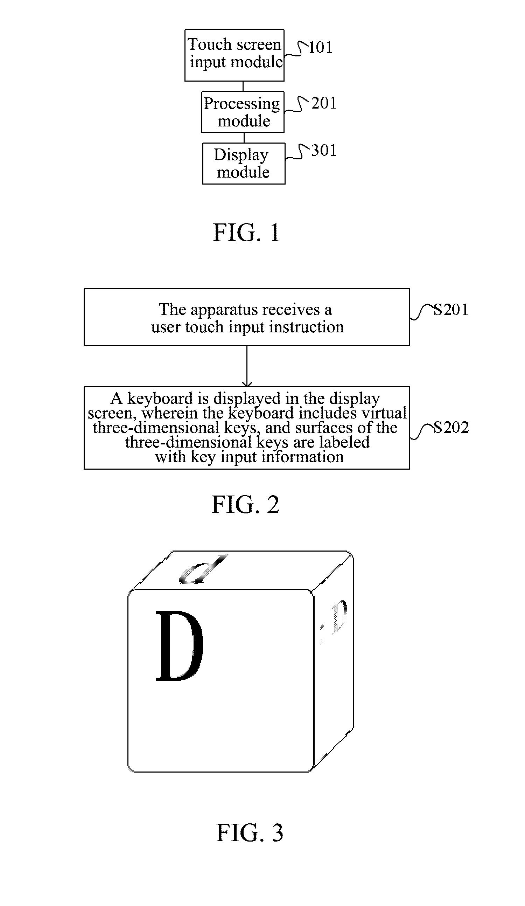

FIG. 1 is a schematic diagram of an apparatus with touch screen according to the example of the present document, and as shown in FIG. 1, the apparatus of the example includes:
a touch screen input module 101, configured to: after receiving a user touch input instruction, send the user touch input instruction to a processing module;
the processing module 102, configured to: after receiving the user touch input instruction, bring up a keyboard; and
a display module 103, configured to: display the keyboard, wherein, part or all of keys in the keyboard are virtual three-dimensional keys, and one or more surfaces of the three-dimensional keys are labeled with corresponding key input information.

With the three-dimensional keys in the example, it can solve the problem of previewing the switch of key functions, and make the user predict operation results in advance without memorizing to switch the key functions, which reduces the repeated steps of user operations and improves the operation efficiency. The graphic style of the previous keys is changed in the three-dimensional keys, which brings feeling of freshness to the user. The user instinctively presses the three-dimensional buttons and knows characteristics of the keys in an enjoyable operation experience, which improves the playability of the mobile phones, develops instinctive operations of the user, and improves the usability of the mobile phones.

Wherein, the touch screen input module 101 also can be configured to: detect a key touch behavior of the user, and send the key touch behavior to the processing module; and
the processing module 102 also can be configured to: analyze the key touch behavior, and perform corresponding operation processing according to the key touch behavior of the user, for example, it can include one or more of the followings:
if it is determined that the key touch behavior is clicking the three-dimensional keys, outputting the key input information of assignments on front surfaces of the three-dimensional keys clicked by the user;
if it is determined that the key touch behavior is sliding one three-dimensional key, rotating the three-dimensional key at a predetermined angle according to a user touch slide direction;
if it is determined that the key touch behavior is sliding at least two three-dimensional keys, rotating all the three-dimensional keys in the three-dimensional keyboard at a predetermined angle according to a user touch slide direction; and
if it is determined that the key touch behavior of the user is a keyboard editing instruction, entering a keyboard editing state, and according to a key clicked by the user, editing the key input information of one or more surfaces of the key or deleting the key, or newly adding one or more keys in a specified area clicked by the user.

The display module 103 also can be configured to: display the key input information output by the processing module, or display a rotation position change state of one three-dimensional key, or display rotation position change states of all the three-dimensional keys, or display the keyboard editing state.

FIG. 2 is a flow diagram of a method for processing keyboard input according to the example of the present document, and the method of the example is applied to an apparatus with touch screen, and as shown in FIG. 2, the following steps are included.

In step S201, the apparatus receives a user touch input instruction.

In step S202, a keyboard is invoked and displayed in the display screen, wherein part or all of keys in the keyboard are virtual three-dimensional keys, and one or more surfaces of the three-dimensional keys are labeled with corresponding key input information.

For example, in electronic devices with touch screen, cubic keys are composed of virtual cubes in the touch screen, and a plurality of virtual cubic keys constitute a three-dimensional keyboard. All surfaces of the cubes are labeled with letters, or symbols, or numbers, or word groups, or letter symbol groups and so on, or certain surfaces are not labeled with contents due to the requirement of keyboard layout. Click operation and slide operation can be performed on the cubic keys. The user clicks one surface of the cube, and the labeled contents such as letters or numbers, etc. on the surface as the input contents are accepted by the apparatus and reflected in the input box. The user slides the cube, and the cube can rotate, and other surfaces of the cube can rotate to the front surface to the user, which is convenient for the user to click.

FIG. 3 is the illustrated cubic key. The front surface of the cube is labeled with a capital letter "D", and the user clicks the cube, and the letter "D" is input to the apparatus. If the user slides the cube once from right to left on the touch screen, the symbol ": D" automatically rotates to the front surface, and the user clicks the cube, and ": D" is input. Similarly, the user slides the cube once from top to bottom, the letter "d" automatically rotates to the front surface, and the key is in an input state of "d".

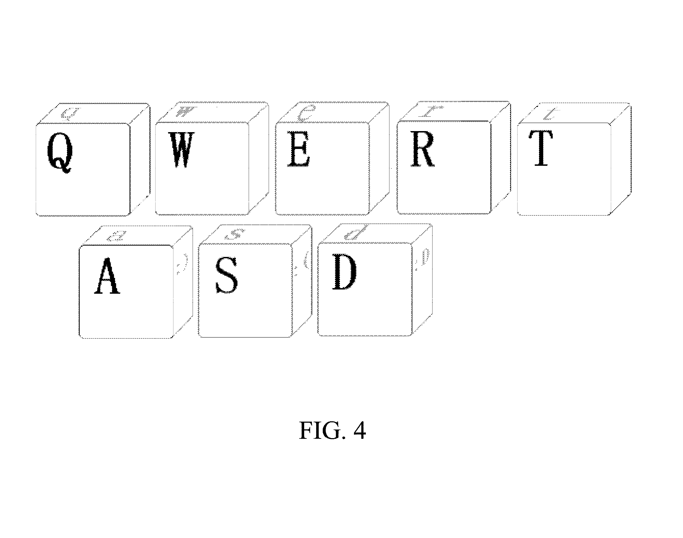

FIG. 4 is a schematic diagram of a common qwerty keyboard, in the specific applications, if the user only slides the key "R", the result thereof is only that the key "R" rotates and other keys do not rotate. If the user slides at least two keys, for example, the user slides the key "R" and the key "S" or the key "R" and the key "D" from top to bottom, the keys of the entire keyboard rotate once from top to bottom, which implements a transformation from capital letters to small letters. If the key "E" and the key "R" are slid from left to right, the keys of the entire keyboard rotate once from left to right, which implements the keyboard switch.

The processing module 102 also can be configured to: after receiving an instruction of transforming three-dimensional keys, transform the three-dimensional keys in the keyboard displayed in the screen into the three-dimensional keys selected by the user.

For example, the user can select to transform the cubic keys in FIG. 4 into cuboid keys or triangular pyramid keys and so on.

The processing module 102 also can be configured to: after receiving an instruction of switching keyboard modes, switch a keyboard mode displayed in the screen to a keyboard mode selected by the user.

For example, the user can select to switch the keyboard mode in FIG. 4 to a keyboard mode of number keys or other keyboard modes.

By using the three-dimensional keys of the electronic device with touch screen mentioned in the example of the present document, compared with the existing common touch keys, the advantage thereof lies in that, with regard to the cubic key as shown in FIG. 3, besides the "D" on the front surface, the "d" and ": D" on the side surfaces are both visible, and if the user needs to input contents such as letters or symbols, etc. of the side surfaces of the cube, the user can implement switch by intuitively sliding the cube.

The contents labeled on the six surfaces of the cube can be previewed by sliding the cube, and the switch keys do not have menu levels, and the user can find the contents through an operation of intuitively sliding the buttons. With the keyboard designed in the example, it possesses a better playability and a simple operation, which relieves the learning burden of the user and improves the user experience of input operation.

With the three-dimensional keys mentioned in the example, a novel and unique keyboard with simple operation can be developed, for example, letters in six languages can be defined on the six surfaces of the cube. A plurality of input methods also can be defined on the six surfaces of the cube, for example, the Pinyin input method is labeled on one surface, and the Stroke input method is labeled on another surface.

With the three-dimensional keys mentioned in the example, the initial positions and angles of the cubic keys can be adjusted. For example, after the angle of the key "D" is adjusted, only the front surface can be displayed, or after the angle of the three-dimensional key is adjusted from left to right and top to bottom, the "D", ": D" and "d" can be all displayed.

The above illustrated cubic key is only an example, and the contents of the claims of the present document are not limited to the cubic keys. Cuboid keys, trapezoid keys, spherical keys, cylindrical keys, conical keys and triangular pyramid keys and so on or three-dimensional keys composed of other polyhedrons all fall into the scope covered by the present document.

The above illustrated contents such as capital and small letters and symbols, etc. labeled on the surfaces of the cube are only an example, and the contents of the example are not limited to the above illustrated contents. The contents that can be labeled on surfaces of the polyhedron key, such as numbers, mathematical symbols (such as +, -, *, / ,=, etc.), network suffixes (such as .com and .org, etc.), letters in other languages, strokes or special symbols and so on, all fall into the scope covered by the present document.

The flow diagram of designing the three-dimensional keyboard according to the example of the present document will be described below, and the following steps are included.

In step 1, an electronic device with touch screen is initialized.

In step 2, a three-dimensional keyboard is established.

Specifically, for example, a cubic key model is established, and the number of cubic keys is determined, and a keyboard layout with the cubic keys, location distributions and input interface function definition templates (i.e. keyboard modes) such as English capital letter keyboard, English small letter keyboard, number and specific symbol keyboard, etc. are established.

In step 3, the keyboard with the cubic keys is initialized, functions of the keys in the keyboard are defined, assignments of the letters, symbols, numbers and word groups and so on are given on the surfaces of the keys, so as to constitute initial values of the surfaces of the cubic keys. Adjustments are carried out according to the input interface function definition templates, including positions of the cubic keys, initial position of each surface of the cubes and angles.

In step 4, a relationship between key touch behaviors of the user and corresponding response processing is preset.

For example, clicking the keys, sliding one key, sliding at least two keys, editing the keyboard and corresponding operation processing are included. The initialized keyboard is output on the touch screen interface to enter the input interface and wait for an operation on the keys from the user.

In step 5, the electronic device with touch screen judges the touch operations of the user according to the present conditions and perform related processing.

If it is determined as clicking the keys, the assignments on the front surfaces of the keys clicked by the user are displayed in the input box. It turns to quit the output interface, and step 6 will be executed.

If it is determined as sliding one key, according to a finger slide direction of the user, for example, the cubic key is rotated by 90 degrees, and a character direction on the appeared surface is updated so as to facilitate the user to check. It turns to quit the output interface, and step 6 will be executed.

If it is determined as sliding at least two keys, according to a finger slide direction of the user, for example, all the cubic keys are rotated by 90 degrees, and character directions on the appeared surfaces are updated so as to facilitate the user to check. It turns to quit the output interface, and step 6 will be executed.

If it is determined as a keyboard editing indication (e.g., the user presses a certain key for a long time), a keyboard editing operation is executed. For example, the user can modify or add or delete assignments of one or more surfaces of a cubic key, or delete the key. For example, pressing a key required to be edited for 2 seconds can edit the assignment of this surface of the key, pressing two keys for 2 seconds can add one or several keys, or delete one or several keys. Or, clicking a specified area on the keyboard can add one or more keys. The editing state is quitted by clicking non-key area. After executing the operation, the save operation is performed and the editing state is quitted. It turns to quit the output interface, and step 6 will be executed.

In step 6, the electronic device with touch screen determines that the user operation is quitting the input interface, and it saves the contents of the input box, or saves the key information adjusted by the user. The flow ends.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or more integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention. Certainly, the present invention can still have other various examples, the skilled familiar to the art can make various corresponding changes and transformations according to the present invention without departing from the spirit and essence of the present invention, and these corresponding changes and transformations shall all fall into the protection scope of the appended claims of the present invention.

### Industrial Applicability

With the method for processing keyboard input and the apparatus in the example of the present document, it can solve the problem of previewing the switch of key functions, and make the user predict operation results in advance without memorizing the switch of the key functions, which reduces the repeated steps of user operations and improves the operation efficiency.

## Claims

1. A method for processing keyboard input, applied to an apparatus with a touch screen, comprising:
after the apparatus receives a user touch input instruction, invoking and displaying a keyboard in a display screen, wherein, the keyboard comprises virtual three-dimensional keys, and one or more surfaces of the three-dimensional keys are labeled with corresponding key input information.

2. The method according to claim 1, after invoking and displaying the keyboard in the display screen, further comprising:
detecting a key touch behavior of a user, and performing corresponding operation processing according to the key touch behavior of the user.

3. The method according to claim 2, wherein: performing corresponding operation processing according to the key touch behavior of the user comprises one or more of followings:
if determining that the key touch behavior of the user is clicking the three-dimensional keys, outputting key input information of assignments on front surfaces of the three-dimensional keys clicked by the user and displaying the key input information;
if determining that the key touch behavior of the user is sliding one three-dimensional key, rotating the three-dimensional key at a predetermined angle according to a user touch slide direction;
if determining that the key touch behavior of the user is sliding at least two three-dimensional keys, rotating all the three-dimensional keys in the three-dimensional keyboard at a predetermined angle according to a user touch slide direction; and
if determining that the key touch behavior of the user is a keyboard editing instruction, entering a keyboard editing state, and according to a key clicked by the user, editing key input information of one or more surfaces of the key or deleting the key, or newly adding one or more keys in a specified area clicked by the user.

4. The method according to claim 1, after invoking and displaying the keyboard in the display screen, further comprising:
after receiving an instruction of transforming the three-dimensional keys, transforming the three-dimensional keys in the keyboard into three-dimensional keys selected by a user.

5. The method according to claim 1, after invoking and displaying the keyboard in the display screen, further comprising:
after receiving an instruction of switching keyboard modes, switching a keyboard mode displayed in the screen to a keyboard mode selected by a user.

6. The method according to any one of claims 1 to 5, wherein: the three-dimensional keys comprise one or more of followings:
cubic keys, cuboid keys, trapezoid keys, spherical keys, cylindrical keys, conical keys and triangular pyramid keys.

7. The method according to any one of claims 1 to 5, wherein: the key input information comprises one or more of followings:
letters, numbers, symbols, strokes, word groups and letter symbol groups.

8. An apparatus with a touch screen, comprising:
a touch screen input module, configured to: after receiving a user touch input instruction, send the user touch input instruction to a processing module;
the processing module, configured to: after receiving the user touch input instruction, invoke a keyboard; and
a display module, configured to: display the keyboard, wherein, the keyboard comprises three-dimensional keys and one or more surfaces of the three-dimensional keys are labeled with corresponding key input information.

9. The apparatus according to claim 8, wherein:
the touch screen input module is further configured to: detect a key touch behavior of a user, and send the key touch behavior to the processing module;
the processing module is further configured to: analyze the key touch behavior, if determining that the key touch behavior is clicking the three-dimensional keys, output key input information of assignments on front surfaces of the three-dimensional keys clicked by the user; if determining that the key touch behavior is sliding one three-dimensional key, rotate the three-dimensional key at a predetermined angle according to a user touch slide direction; if determining that the key touch behavior is sliding at least two three-dimensional keys, rotate all the three-dimensional keys in the three-dimensional keyboard at a predetermined angle according to a user touch slide direction; and if determining that the key touch behavior of the user is a keyboard editing instruction, enter a keyboard editing state, and according to a key clicked by the user, edit key input information of one or more surfaces of the key or delete the key, or newly add one or more keys in a specified area clicked by the user; and
the display module is further configured to: display key input information output by the processing module, or display a rotation position change state of one three-dimensional key, or display rotation position change states of all the three-dimensional keys, or display the keyboard editing state.

10. The apparatus according to claim 8, wherein:
the processing module is further configured to: after receiving an instruction of transforming the three-dimensional keys, transform the three-dimensional keys in the keyboard into three-dimensional keys selected by a user.

11. The apparatus according to claim 8, wherein:
the processing module is further configured to: after receiving an instruction of switching keyboard modes, switch a mode of the keyboard to a keyboard mode selected by a user.

12. The apparatus according to any one of claims 8 to 11, wherein: the three-dimensional keys comprise one or more of followings:
cubic keys, cuboid keys, trapezoid keys, spherical keys, cylindrical keys, conical keys and triangular pyramid keys;
the key input information comprises one or more of followings:
letters, numbers, symbols, strokes, word groups and letter symbol groups.
